Europäisches Patentamt

European Patent Office

Office européen des brevets

(19)

(11) **EP 0 755 141 B1**

(12) **EUROPEAN PATENT SPECIFICATION**

(45) Date of publication and mention
of the grant of the patent:
**12.10.2005 Bulletin 2005/41**

(51) Int Cl.$^7$: **H04L 25/03**

(21) Application number: **96302841.0**

(22) Date of filing: **23.04.1996**

(54) **Adaptive decision feedback equalization for communication systems**

Adaptive, entscheidungsrückgekoppelte Entzerrung für Kommunikationssysteme

Egalisation adaptative, à décision récursive, pour systèmes de communication

(84) Designated Contracting States:
**DE FR GB**

(30) Priority: **19.07.1995 US 503985**

(43) Date of publication of application:
**22.01.1997 Bulletin 1997/04**

(73) Proprietors:
• **SHARP KABUSHIKI KAISHA**
**Osaka 545 (JP)**
• **SHARP MICROELECTRONICS TECHNOLOGY,**
**INC.**
**Camas, WA 98607 (US)**

(72) Inventor: **Boray, Giridhar K.**
**Vancouver, Washington 98684 (US)**

(74) Representative: **Brown, Kenneth Richard et al**
**R.G.C. Jenkins & Co.**
**26 Caxton Street**
**London SW1H 0RJ (GB)**

(56) References cited:
**EP-A- 0 426 026     US-A- 5 268 930**
**US-A- 5 353 307     US-A- 5 398 259**

• **KOBAYSHI: "Application of Hestenes-Stiefel Algorithm to channel equalization." IEEE INTERNATIONAL CONFERENCE ON COMMUNICATIONS, 14 - 16 June 1971, pages 21/25-21/30, XP002075511 Montreal, Canada**
• **CHAN ET AL.: "Design of adaptive equalizer for wide-band mobile communications" JOURNAL OF THE KOREAN INSTITUTE OF TEEMETICS AND ELECTRONICS, vol. 32a, no. 1, January 1995, pages 14-25, XP002075242**
• **BORAY ET AL.: "Conjugate gradient techniques for adaptive filtering" IEEE TRANSACTIONS ON CIRCUITS AND SYSTEMS-I: FUNDAMENTAL THEORY AND APPLICATIONS, vol. 39, no. 1, January 1992, pages 1-10, XP002075243**

**Description**

Technical Field

The present invention relates generally to communication, and more particularly, to the feedback equalization of signals in a communication system. More particularly still, the invention concerns a digital communication system employing an automatic decision feedback equalizer which utilizes an adaptive conjugate gradient error convergence algorithm. Although the present invention has broad utility, it has proven especially well-suited for use in the equalization of wireless communications, and thus is described in the context of a digital cellular telephone system below.

Background Art

Whenever a signal is transmitted across a communication channel, it is perhaps inevitable that the received signal will be distorted due to factors determined by the characteristics of the channel through which the signal is sent. In a cellular telephone system, for example, where a signal is transmitted across an ever-changing wireless communication channel, the signal will experience distortion in the form of frequency-selective fading, multipath propagation and additive white gaussian noise. These distortions, in turn, can lead to intersymbol interference, and consequently to error in the retrieval of information and/or in the interpretation thereof.

In order to reduce the incidence of error, cellular telephone systems have in the past employed decision feedback equalizers which estimate signal distortion, and compensate for such distortion by combining selectively weighted components of the received signal to produce an approximation of the signal which was actually sent. These equalizers, also known as adaptive equalizers, typically utilize variable weighting coefficients which dynamically modify time-delayed versions of the received signal. The weighting coefficients are periodically updated to address changing channel conditions, such updates being made in accordance with a predetermined error-minimizing algorithm (also referred to herein as an error convergence algorithm).

One widely used error-minimizing algorithm is the Least Mean Squares (LMS) algorithm, an algorithm which is characterized by its computational simplicity and its slow error convergence rate. Another popular algorithm is the Recursive Least Squares (RLS) algorithm, which has a faster error convergence rate, but is computationally complex and requires a great deal of memory storage space. Neither algorithm provides a method of efficiently updating an equalizer's weight coefficients so as to quickly minimize error. What is needed is a system which employs a method characterized both by computational simplicity and by a fast error convergence rate.

It is therefore desirable to provide for improved equalization within a communication system so as to quickly adapt the system to compensate for changing distortion of a received signal with a minimum of computational complexity, numeric instability and storage space.

KOBAYSHI: 'Application of Hestenes-Stiefel Algorithm to channel equalization'. IEEE INTERNATIONAL CONFERENCE ON COMMUNICATIONS, 14-16 June 1971, pages 21/25-21/30, XP002075511 Montreal, Canada, discloses an equalization algorithm: an application of the conjugate gradient method devised by Hestenes and Stiefel originally to solve a system of simultaneous linear equation. Hestenes-Stiefel (H-S) algorithm includes the classical gradient and steepest descent methods as special cases. The H-S algorithm has recently been applied to the design of an array processor. Although there exists other optimization techniques to extremize functions, the H-S method seems especially suitable from the view point of implementation, since it does not require prior knowledge of signal and noise statistics.

US 5 398 259 discloses an interference canceller in which a feedforward filter receives an input signal to produce an equalized feedforward output signal in which CW interference is cancelled and a feedback filter receives the output of a decision circuit to produce an equalized feedback output signal. The equalized feedforward and feedback output signals are combined together to cancel intersymbol interference before being applied to the decision circuit. First tap-gain control circuits derive first tap-gain signals from a decision error and signals at the first delay-line taps and respectively apply these signals to the first tap-gain multipliers. Second tap-gain control circuits derive second tap-gain signals from the decision error and signals at the second delay-line taps and respectively apply these signals to the second tap-gain multipliers. A complex correlation is detected between signals at opposite ends of the first tapped delay line and compared with a threshold. At the instant the detected correlation becomes lower than the threshold, all tap-gain control circuits are caused to hold their outputs at the amplitude values which were attained at that instant. In a modified embodiment, correlations between the input signal received by the first tapped delay line and the delayed signals at the first delay-line taps are detected and normalized by a factor 1/N where N is equal to the number of delay taps. The normalized correlations are used as the tap-gain signals for all the tap-gain multipliers.

Disclosure of the Invention

Thus a communication system which employs an equalization method whereby weight coefficients of a decision feedback equalizer may be generated recursively using a reduced-complexity conjugate gradient algorithm. The system includes both a feed-forward filter with a plurality of feed-forward taps, and a feedback filter with a plurality of feedback taps. To compensate for distortion of the received signal, both the feed-forward and feedback taps are weighted, the outputs of such taps being combined to produce a modified version of the received signal which approximates the signal which was sent. The taps are weighted in accordance with variable weight coefficients, such coefficients being determined by a weight coefficient generator which compares the modified received signal to a desired signal in order to determine the transmission error. The transmission error then is used to update the weight coefficients recursively until predetermined error criteria are met. This algorithm is followed for each symbol, but the greatest improvement is accomplished within a training period during which the transmitted signal is a training signal which is known at the receiver end.

According to the present invention there is provided a digital communication system as an adaptive equalization method which involves the steps of: (1) receiving a multi-symbol signal over a communication channel; (2) processing the received signal by feeding the signal through a feed-forward filter and a feedback filter, and combining corresponding weighted outputs of feed-forward taps and feedback taps to modify the signal; and (3) setting estimated weight coefficients for the feed-forward and feedback taps; wherein repeatedly updating the weight coefficients and redetermining a transmission error until either a predetermined maximum number of updates is performed, or until a last-updated transmission error is less than or equal to a predetermined percentage of the initial transmission error.

Preferably, feedback equalization involves determining an error value for each weight coefficient update and comparing the determined error value with an initial error value of the current symbol. This comparison can serve to identify the predetermined error criteria, weight coefficient updating being halted when the determined error value is less than or equal to a predetermined percentage of the current symbol's initial error value.

Also disclosed is a communication system including a receiver which is specially configured to receive a degraded multi-symbol signal which has been transmitted across a communication channel. Such a receiver typically will include a feed-forward filter which receives the degraded signal through the communication channel and a feedback filter which receives a signal selected from between a known training signal and a previously estimated data signal. The feed-forward filter preferably will include a plurality of time-varied taps, each weighted to define a plurality of adaptive feed-forward paths which combine to produce an intermediate feed-forward signal. The feedback filter similarly preferably will include a plurality of time-varied taps, each weighted to define a plurality of adaptive feedback paths which combine to produce an intermediate feedback signal. An adder combines the two intermediate signals to produce a modified received signal which has reduced intersymbol interference. A tap weight update generator compares the modified signal to a known desired received signal to determine an initial transmission error for use in initially updating tap weights for a current symbol. Tap weights subsequently are recursively updated based on corresponding transmission errors, typically until either a predetermined number of updates are made, or until the corresponding transmission error is less than or equal to a predetermined percentage of the initial transmission error.

Further aspects of the present invention are set out in claims 8, 16, 18 and 19. In order that the present invention be more readily understood, specific embodiments thereof will now be described with reference to the accompanying drawings.

Brief Description of the Drawings

Fig. 1 illustrates a frame and slot timing structure of the type employed in a typical Time Division Multiple Access (TDMA) communication system;

Fig. 2 is a simplified block diagram of a communication system according to an embodiment of the present invention;

Fig. 3 is a block diagram showing the demodulator of Fig. 2 in greater detail;

Fig. 4 is a flowchart illustrating a reduced-complexity conjugate gradient error convergence algorithm for use in adaptive feedback equalization of the communication system shown in Fig. 2; and

Fig. 5 is a graph which plots average mean squared error v. symbol count for systems employing various error convergence algorithms so as to provide a comparison between error convergence rates.

As a result of ever-increasing requirements for capacity, there has for some time been a trend toward the adoption of digital communication technology, technology which provides for the efficient utilization of the airwaves. Digital technology, in turn, has led to the development of improved channel access methods, including Time Division Multiple Access (TDMA), a channel access method which involves transmission of information over a shared communication channel.

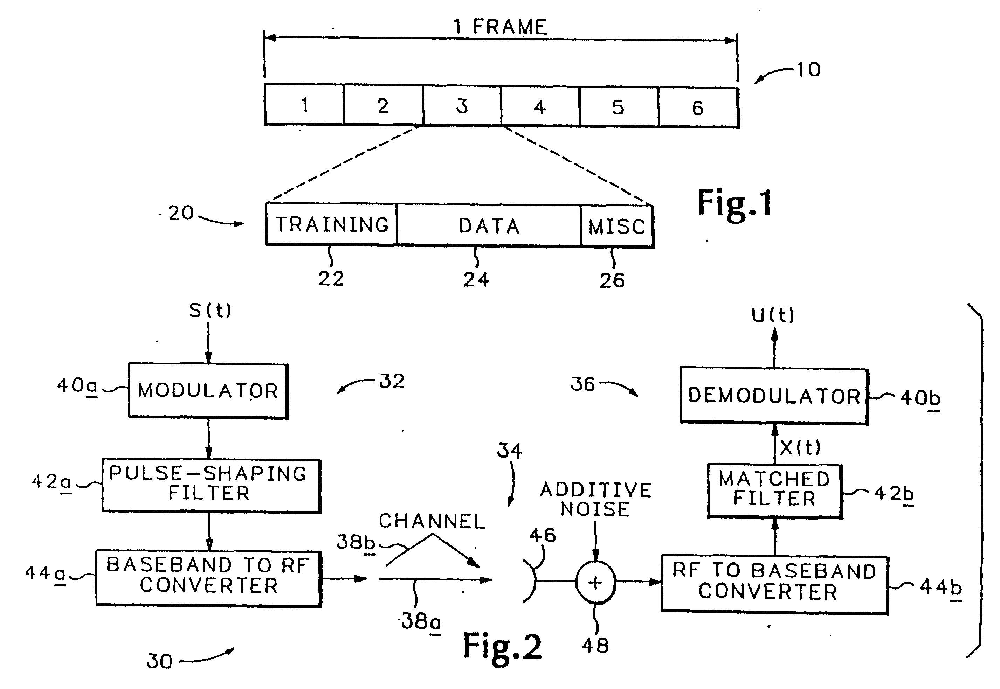

In a TDMA communication system, the communication channel is shared through the use of a frame and slot timing structure wherein a single radio frequency channel (typically a 30 KHz RF channel in cellular telephone communication) is partitioned into a plurality of serial time frames, each of which is divided into a plurality of serial time slots. Each time slot is assigned to a particular communication link, during which time the channel is reserved for that link. A user thus will transmit and receive only during time slots assigned to him or her. A typical frame and slot timing structure is shown at 10 in Fig. 1, such structure being modelled after that which is commonly used in a North American digital cellular telephone system. Embodiments of the present invention are described below in the context of such a system. However, the invention may similarly be employed in a variety of different communication systems, including systems employing Code Division Multiple Access (CDMA) or other channel access methods.

As indicated, timing structure 10 includes a time frame having six time slots (numbered 1-6), each containing information from a particular user or source. The time slots are divided into predetermined packets, each including a bit sequence of predetermined length. Time slot 3, for example, will be seen at 20 to include a training sequence 22, a data sequence 24 and a miscellaneous information sequence 26. The training sequence includes a series of known training symbols used to adapt a receiver to the communication channel. The data sequence includes the transmitted data (i.e., data symbols). The miscellaneous information sequence includes symbols such as an acknowledge symbol or the like.

All of the transmitted symbols are distorted, or degraded, due to communication channel effects, but the actual transmitted training symbols are known to the receiver. The training sequence thus precedes both the data sequence and the miscellaneous information sequence, providing the receiver with information whereby channel effects may be determined for use in initially adapting the receiver to compensate for signal distortions which result therefrom. In this manner, more accurate retrieval and interpretation of data is ensured.

Referring now to Fig. 2, a block diagram is provided to illustrate the workings of a wireless communication system, such diagram depicting a digital communication system 30. System 30 comprises a cellular telephone system, including a transmitter 32 which transmits a digital signal across a wireless communication channel 34 for receipt by a mobile receiver 36. As indicated previously, the signal typically is distorted during passage through channel 34, usually due to multipath propagation which results from the existence of multiple signal propagation paths. Two of such paths are shown at 38a and 38b. Path 38a represents a direct path. Path 38b represents one of many different reflective paths. Those skilled will appreciate that such multipath propagation will lead to time-delayed receipt of plural signal reflections, resulting in the overlapping of different signal components. The transmitted signal also is distorted, or degraded, due to frequency-selective fading which may be caused by changing channel conditions, and due to additive noise, generally in the form of white gaussian noise.

As indicated, transmitter 32 somewhat typically employs a modulator 40a which receives a multi-symbol digital signal S(t) and modulates the signal for passage to a pulse-shaping filter 42a. Signal S(t), it will be understood, may take the form of a digitized voice signal, or may simply include digital information from a computer, fax machine or the like. Filter 42a, which typically takes the form of a square root raised cosine pulse shaper, passes the pulse-shaped signal to a baseband-to-RF converter 44a which converts the pulse-shaped signal to RF form and transmits the converted signal across the communication channel which has been partitioned in a manner similar to that described above.

The signal is received at the receiver by an antenna 46, and then passed on to an RF-to-baseband converter 44b for conversion back from RF form to baseband form. The received and converted signal then is passed to a matched filter 42b which matches the operation of pulse-shaping filter 42a to produce a multi-symbol received signal X(t). Received signal X(t), it will be appreciated, is characterized by distortions due to factors such as multipath propagation, frequency-selective fading, and additive noise (the introduction of additive noise is shown illustratively at 48). X(t) is passed to demodulator 40b, the product of which is output as digital signal U(t).

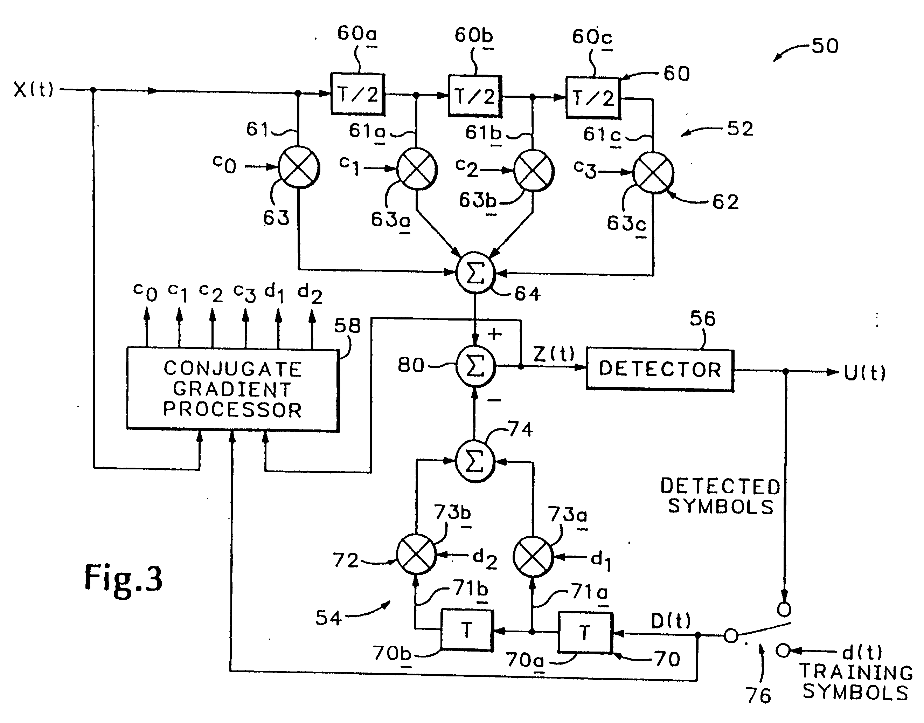

Turning now to Fig. 3, a more specific illustration of the communication system's demodulator 40b is shown in greater detail, such demodulator including an adaptive equalizer in the form of a decision feedback equalizer 50 having a feed-forward filter 52 and a feedback filter 54. The demodulator also includes a detector 56 which estimates the received and equalized signal, and a conjugate gradient processor 58 which periodically adapts the decision feedback equalizer to address changing communication channel effects. In the preferred embodiment, the equalizer is adapted with the introduction of each new symbol (training or data), which may in turn be sampled a plurality of times.

Focussing initially on feed-forward filter 52, it will be understood that the input X(t) to the feed-forward filter is defined by the received data which has been down-converted to baseband by RF-to-baseband converter 44b and passed through matched filter 42b. In the illustrative digital cellular telephone system, X(t) takes the form of a multi-symbol signal which includes multi-symbol training and data sequences similar to those described above. Typically, feed-forward filter 52 is implemented as a shift register 60, which operates to define plural time-delayed versions of the received signal X(t). A multiplier 62 weights each time-delayed version of signal X(t) to produce weighted signal components which are then combined by adder 64 to produce an intermediate feed-forward signal.

In the depicted embodiment, shift register 60 includes a plurality of time delay elements 60a, 60b, 60c, each delaying the input signal a predetermined time T/2 (where T is the time duration of a symbol). The time delays thus produce time-delayed versions of the received signal, each of which may be tapped to define a plurality of feed-forward paths 61a, 61b, 61c. The actual signal similarly may be tapped to define yet another feed-forward path 61, representing a non-delayed multipath component of received signal X(t). Feed-forward paths 61, 61a, 61b and 61c are collectively referred to herein as feed-forward taps. Although four feed-forward taps are shown, those skilled will understand that virtually any number of feed-forward taps may be employed.

Turning to multiplier 62, it will be noted that such multiplier is in fact a series of multiplier elements 63, 63a, 63b, 63c, each associated with a particular feed-forward tap. The multiplier elements are useful in weighting the various multipath signal components, each multiplier element receiving a corresponding weighting element $c_0$, $c_1$, $c_2$, $c_3$. The weighting coefficients are identified, and periodically updated, by conjugate gradient processor 58 as will be described in detail below.

Feedback filter 54 similarly includes a shift register 70 defined by a series of time delay elements 70a, 70b, each delaying a feedback input signal D(t) a predetermined time T (where T is the time duration of a symbol). The time delay elements thus produce time-delayed versions of feedback input signal D(t). These time-delayed versions may be tapped to define feedback paths 71a, 71b, such paths being referred to herein collectively as feedback taps. The feedback taps are weighted by a multiplier 72 which includes multiplier elements 73a, 73b, each of which multiplies a corresponding signal component by a feedback weight coefficient $d_1$, $d_2$. The products are combined by adder 74 to produce an intermediate feedback output. Weight coefficients $d_1$, $d_2$ are determined, and periodically updated, by conjugate gradient processor 58. Although two feedback taps are shown, those skilled will understand that virtually any number of feedback taps may be employed.

It is to be understood that feedback input signal D(t) actually is a representation of an already-determined desired symbol, either from detector 56 (i.e., a detected symbol U(t)), or from a training memory (i.e., a known training symbol d(t)). A selector 76 thus chooses from between a detected symbol and a training symbol, depending on whether equalizer training for the present time slot has yet occurred. The Training symbols are employed to provide a reference whereby the equalizer initially may be adapted to compensate for unknown channel distortion. Training sequence duration (i.e., the number of training symbols necessary to achieve a usable data sequence) may be minimized by implementation of the present embodiment.

In accordance with the operation of the depicted decision feedback equalizer, the intermediate feed-forward signal and the intermediate feedback signal are combined using adder 80 (the intermediate feedback output actually is subtracted from the intermediate feed-forward output) so as to compensate for distortion in the received signal X(t). The result, modified signal Z(t), is then passed to detector 56 which compares the modified signal with predefined signal criteria to produce an estimated output signal U(t). By updating the weight coefficient to address communication channel effects, the distortion in Z(t) can be decreased. As the distortion in Z(t) is decreased, so is the error in estimated output signal U(t). U(t) thus is an increasingly accurate approximation of the transmitted signal S(t). The error in estimated output signal U(t) thus will converge upon a minimum error as the equalizer is progressively adapted to deal with communication channel effects.

Error convergence is achieved through optimization of the equalizer's weight coefficients $c_0$, $c_1$, $c_2$, $c_3$, $d_1$, $d_2$, such coefficients being selected by conjugate gradient processor 58. The conjugate gradient processor, employs an adaptive equalization method whereby weight coefficients are recursively generated based on the transmission error as determined by comparing the modified signal Z(t) with a desired signal D(t). The weight coefficients typically are updated for every symbol (or group of symbols), each update being achieved by recursive implementation of a reduced-complexity conjugate gradient algorithm which will now be described.

Focussing now on conjugate gradient processor of adaptive equalizer 50, it will be understood that the weight coefficients may be considered to define a vector $\mathbf{W}_k(i)$ which includes weight coefficients $c_0$, $c_1$, $c_2$, $c_3$, $d_1$, $d_2$ at update iteration k for symbol i. $\mathbf{W}_k(i)$ thus may be expressed alternatively as:

$$\begin{bmatrix} c_0 \\ c_1 \\ c_2 \\ c_3 \\ d_1 \\ d_2 \end{bmatrix}$$

$\mathbf{W}_k(i)'$ is $\mathbf{W}_k(i)$ transposed, and may similarly be expressed as:

$$[c_0 \ c_1 \ c_2 \ c_3 \ d_1 \ d_2]$$

These weight coefficients are updated repeatedly for each symbol, the number of updates being determined in accordance with a reduced-complexity conjugate gradient error convergence algorithm. Weight coefficients are updated in accordance with the expression:

$$W_{k+1}(i) = W_k(i) + a(k)n(k)$$

where k is a weight coefficient update iteration number, $\mathbf{W_k}(i)$ is a vector of current weight coefficients for symbol i, $\mathbf{W_{k+1}}(i)$ is a vector of updated weight coefficients for symbol i, n(k) is an error-correcting direction vector, and a(k) is a variable step size.

Both a(k) and n(k) are dependent on an error value which represents transmission error for the current update. The error value used in updating weight coefficients in the present embodiment is the squared magnitude of a gradient function $Grad[W_k(i)]$, where the gradient function is determined in accordance with the expression:

$$Grad[W_k(i)] = dE[e^2(i)]/dW_k(i)$$

with $E[e^2(i)]$ equal to the mean of the squared error between the actual equalizer output (modified signal Z(t)) and a desired equalizer output (feedback signal D(t)). The gradient alternatively may be expressed as:

$$Grad[\mathbf{W_k}(i)] = 2/nw \ \Sigma_{j=i-nw+1}^{i} \ (\mathbf{W_k}(i)'Q(j) - D(j))Q(j)$$

where nw is a scalar representing a gradient averaging window size, $\mathbf{W_k}(i)$ is a vector of current weight coefficients for symbol i, Q(j) is a vector of the nw most-recent feed-forward and feedback filter inputs, and D(j) is a scalar representing a known current training symbol during equalizer training and a determined current data symbol during data communication.

Step size a(k) varies in accordance with the expression:

$$a(k) = Grad[W_k(i)]'n(k)/n(k)'(Grad[W_k(i)] - Grad(y(k)))$$

where y(k) is an intermediate vector equal to $W_k(i) - Grad[W_k(i)]$, and error-correcting direction vector n(k) is equal to $-Grad[W_k(i)] + b(k-1)n(k-1)$. b(k-1) is a direction scaling factor equal to $Grad[W_k(i)]'Grad[W_k(i)]/Grad[W_{k-1}(i)]'Grad[W_{k-1}(i)]$.

The weight coefficients of each symbol are updated a number of times which varies based on how quickly error convergence is reached. The present conjugate gradient algorithm determines an error value associated with each weight coefficient update and compares the determined error value with an initial error value of the current symbol. Weight coefficient updating for the symbol is halted when the determined error value is less than or equal to a predetermined percentage (i.e., ten percent) of the initial error value. The conjugate gradient processor may further limit weight coefficient updating for each symbol to no more than a predetermined maximum number of iterations $k_{max}$, such maximum number being equal, generally, to the total number of feed-forward and feedback taps. In the depicted embodiment weight coefficient updating thus would be halted either after six iterations, or after the error value has fallen to ten percent of the initial error value.

An improved method of adaptive equalization thus is provided for use in a digital cellular telephone system wherein the system includes a transmitter for transmitting a multi-symbol signal and a receiver for receiving a degraded multi-symbol signal which results from such transmission. As should be apparent, the method is implemented by the receiver which employs a decision feedback equalizer having a feed-forward filter with a plurality of weighted feed-forward taps and a feedback filter with a plurality of weighted feedback taps.

The method includes the steps of: setting estimated weight coefficients for the feed-forward and feedback taps, sending a symbol over a communication channel to the receiver, receiving a degraded symbol derived from the symbol which was sent over the communication channel, processing the degraded symbol by feeding the degraded symbol through the feed-forward and feedback filters, and by combining corresponding weighted outputs of the feed-forward and feedback taps to produce a modified symbol, analyzing the modified symbol to estimate the sent symbol,

comparing the modified symbol with a corresponding desired symbol to determine an initial transmission error, and repeatedly updating the weight coefficients and redetermining the transmission error until either a predetermined maximum number of updates is performed, or until a last-updated transmission error is less than or equal to a predetermined percentage of the initial transmission error.

The weight coefficients are updated by a conjugate gradient processor (or tap weight update generator) which recursively generates weight coefficients in accordance with a reduced-complexity conjugate gradient error convergence algorithm so as to compensate for distortion due to changing communication channel effects.

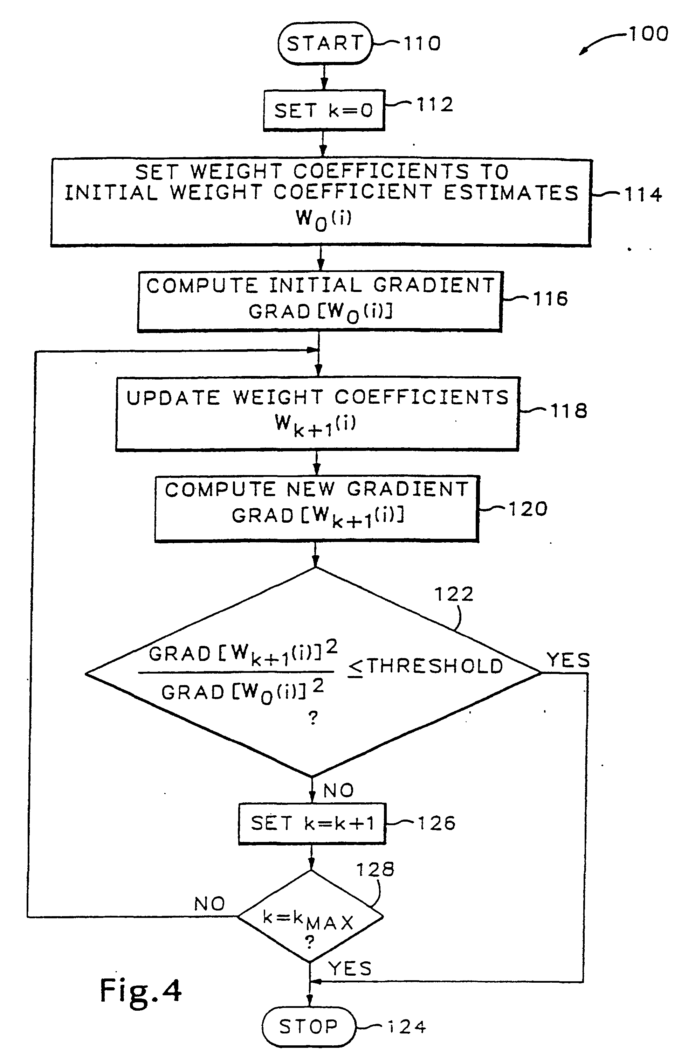

The proposed reduced-complexity conjugate gradient error convergence algorithm is illustrated generally at 100 in Fig. 4, the method beginning at 110. As indicated, the algorithm initially resets the update iteration number k to 0 at 112, and sets the weight coefficients of the feed-forward and feedback taps to initial weight coefficient estimates $W_0(i)$ at 114. These weight coefficients are used at 116 to compute an initial gradient $\text{Grad}[W_0(i)]$ which may be used to determine an initial transmission error value associated with the initial estimate of symbol i. The initial transmission error value is the squared magnitude of the gradient $\text{Grad}[W_0(i)]$.

The weight coefficients are then updated at 118 based on the previous transmission error value in accordance with the expression:

$$W_{k+1}(i) = W_k(i) + a(k)n(k)$$

where $W_{k+1}$ is a vector of updated weight coefficients, and a(k) and n(k) are defined as described above. A new gradient $\text{Grad}[W_{k+1}(i)]$ is then computed at 120 to determine a transmission error value associated with update k+ 1 of symbol i. The transmission error value of update k + 1 is the squared magnitude of the gradient $\text{Grad}[W_{k+1}(i)]$.

After the new gradient is computed, and the corresponding transmission error value is determined, the newly computed transmission error is compared with the initial transmission error to determine whether predetermined error criteria are met. Specifically, the determined error value is compared with the initial error value to determine whether the determined error value is less than or equal to a predetermined percentage of the initial error value. In the depicted embodiment, this comparison is shown at 122 by the expression:

$$\text{Grad}[W_{k+1}(i)]^2/\text{Grad}[W_0(i)]^2 \leq \text{threshold}$$

where the threshold is the predetermined percentage of the initial error value. In the present embodiment, the threshold is chosen at ten percent, but other thresholds, such as twenty percent, thirty percent, etc. may similarly be chosen without departing from the invention as set forth herein.

If the error criteria are met (indicated by the YES line from 122), weight coefficient update for the current symbol ceases as indicated at 124. If the error criteria are not met (indicated by the NO line from 122), the update number is incremented at 126, and then compared at 128 to a maximum update number $k_{max}$ which is equal to the maximum number of updates which are allowed. In the present embodiment, $k_{max}$ is equal to the total number of feed-forward and feedback taps which are employed by the equalizer. If $k=k_{max}$ (indicated by the YES line from 128), weight coefficient updates for the current symbol are ceased as indicated at 124. If k is less than $k_{max}$, weight coefficients are again updated, a new gradient is computed and the newly computed gradient is compared to the initial gradient to once again determine if the predetermined error criteria are met.

The receiver may be pre-adapted selectively for various types of communication channels, generally by setting the predetermined percentage in accordance with user expectations and needs. For example, the receiver may be pre-adapted for either stationary use (e.g., in a home or office) or mobile use (e.g., in a car). The predetermined percentage (threshold) at which updating ceases thus can be set at a first percentage when the receiver is adapted for a first use (i.e., a stationary use), and at a second different percentage when the receiver is adapted for a second different use (i.e., a mobile use). Typically, the threshold percentage for stationary use will be lower than the threshold percentage for mobile use, due to the more stable communication channel of a stationary receiver, and due to the higher expectations of stationary users. Further, mobile or stationary use each may be considered to include several different categories of use, each of which may have specific characteristics. A pedestrian, for example, may have higher expectations from a cellular telephone communication system than a user travelling in a car. Both, however, are mobile users. Therefore, the receiver may be adapted to provide for three or more different threshold percentages to address three or more different situations.

The weight coefficients thus are repeatedly updated, and the transmission error is repeatedly redetermined until either a predetermined maximum number of updates are performed, or until a last-updated transmission error value is less than or equal to a predetermined percentage of the initial transmission error value. The adaptive equalization method typically is repeated for each symbol, including training symbols and data symbols. It is noted, however, that multiple samples of a single symbol may be considered without requiring recursive weight coefficient update for each sample.

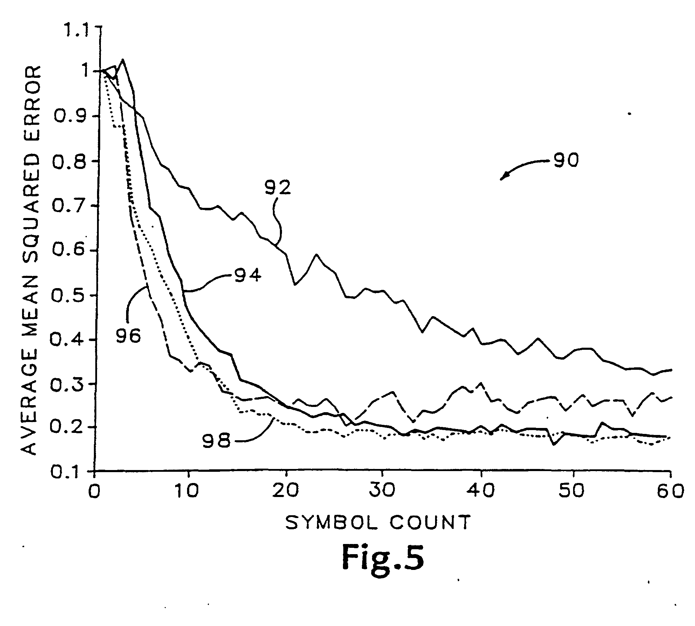

Referring now to Fig. 5, it will be noted that a graph is depicted at 90, such graph showing a plot of average mean squared error v. symbol count for a number of different error convergence algorithms, including the reduced-complexity conjugate gradient algorithm described above. The graph thus provides an opportunity to compare the error conversion rates of such various error convergence algorithms in order to illustrate some of the benefits which the present invention provides. Line 92 represents error convergence of a receiver employing a Least Mean Squares (LMS) error convergence algorithm. Line 94 represents error convergence of a receiver employing a conjugate gradient error convergence algorithm with a gradient averaging window nw which is equal to 2 (CG(2)). Line 96 represents error convergence of a receiver employing a conjugate gradient error convergence algorithm where the gradient averaging window nw is equal to 3 (CG(3)). Line 98 depicts error convergence of a receiver employing a reduced-complexity conjugate gradient algorithm having a gradient averaging window nw which is equal to 3 (CG(3)-reduced).

It will be appreciated that the LMS algorithm which was employed to produce the error convergence rate shown in line 92 results in an average mean squared error which does not converge as quickly as the conjugate gradient error convergence algorithms CG(2), CG(3), CG(3)-reduced. All of the conjugate gradient error convergence algorithms thus provide for improved performance over the LMS algorithm. The RLS error convergence algorithm, although not shown, produces error convergence at a relatively fast rate, but at an extremely high cost of computational complexity and storage space.

Computational complexity also should be compared for the various conjugate gradient error convergence algorithms. It will be noted, for example, that the equalizer which employs CG(2) algorithm converges after approximately thirty symbols and has an order of complexity of O(24) where the order of complexity is defined by the expression $O(k_{max}*nw*nw)$ with nw=2 and $k_{max}$ = 6. With the CG(3) method, error convergence occurs within fifteen symbols, but the order of complexity increases to O(54) due to the increase in nw from 2 to 3. The CG(3)-reduced algorithm achieves error convergence within approximately twenty symbols, but has an order of complexity of only O(36). This is because the order of complexity of the CG(3)-reduced algorithm may be defined as $O(k_{max}*nw*k)$ with nw=3, $k_{max}$=6 and k=2 (which could represent an average number of updates before the predetermined error criteria are met). The CG(3)-reduced algorithm thus offers fast convergence with low computational complexity.

## Claims

1. An adaptive equalization method for use in a digital communication system (30) which employs a decision feedback equalizer (50) having a feed-forward filter (52) with a plurality of weighted feed-forward taps, and a feedback filter (54) with a plurality of weighted feedback taps, said method comprising the steps of:

   receiving a multi-symbol signal;
   processing the received signal by feeding the signal through the feed-forward filter (52) and the feedback filter (54), and combining corresponding weighted outputs of the feed-forward taps and the feedback taps to modify the signal; and
   setting estimated weight coefficients for the feed-forward and feedback taps; **characterized by**
   repeatedly updating the weight coefficients and redetermining a transmission error until either a predetermined maximum number of updates is performed, or until a last-updated transmission error is less than or equal to a predetermined percentage of the initial transmission error.

2. The adaptive equalization method of claim 1, wherein the predetermined percentage is ten percent.

3. The adaptive equalization method of claim 1, wherein the predetermined maximum number of weight coefficient updates is equal to a total number of feed-forward and feedback taps.

4. The adaptive equalization method of claim 1, wherein the error value is the squared magnitude of a gradient function Grad[$W_k$(i)] for symbol i, the gradient function being determined in accordance with the expression:

$$Grad[W_k(i)]=dE[e^2(i)dW_k(i)$$

where E[$e^2$(i)] is the mean of the squared error between an actual equalizer output and a desired equalizer output and **$W_k$(i)** is a vector of current weight coefficients.

5. The adaptive equalization method of claim 1, wherein the error value is the squared magnitude of a gradient function Grad[**Wk(i)**] for symbol i, the gradient function being determined in accordance with the expression:

$$\text{Grad}[W_k(i)] = 2/nw \sum_{j=i-nw+1}^{i} (W_k(i)'Q(j) - D(j))Q(j)$$

where, nw is a scalar representing a gradient averaging window size, $W_k(i)$ is a vector of current weight coefficients, Q(j) is a vector of the nw most-recent feed-forward and feedback filter inputs and D(j) is a scalar representing a known current training symbol during equalizer training and a determined current data symbol during data communication.

6. The adaptive equalization method of claim 5, wherein the weight coefficients are updated in accordance with the expression

$$W_{k+1}(i) = W_k(i) + a(k)n(k)$$

where k is a weight coefficient update number, $W_k(i)$ is a vector of current weight coefficients for symbol i, $W_{k+1}(i)$ is a vector of updated weight coefficients for symbol i, $n(k)$ is an error-correcting direction vector, and a(k) is a variable step size.

7. The .adaptive equalization method of claim 6, wherein step size a(k) varies in accordance with the expression:

$$a(k) = \text{Grad}[W_k(i)]'n(k)/n(k)'(\text{Grad}[W_k(i)] - \text{Grad}[y(k)])$$

where y(k) is an intermediate vector equal to $W_k(i) - \text{Grad}[W_k(i)]$.

8. An adaptive equalization method for use in a digital cellular communication system (30) which employs a transmitter (32) for sending a multi-symbol signal and a receiver (36) for receiving a degraded multi-symbol signal, the receiver (36) including a decision feedback equalizer (50) having a feed-forward filter (52) with a plurality of weighted feed-forward taps, and a feedback filter (54) with a plurality of weighted feedback taps, said method comprising the steps of:

setting estimated weight coefficients for the feed-forward and feedback taps;
sending a symbol over a communication channel (34) to the receiver (36), the symbol being known to the receiver (36);
receiving a degraded symbol derived from the symbol which was sent over the communication channel (34);
processing the degraded symbol by feeding the degraded symbol through the feed-forward and feedback filters (52,54), and by combining corresponding weighted outputs of the feed-forward and feedback taps to produce a modified symbol;
analyzing the modified symbol to estimate the sent symbol;
comparing the modified symbol with a corresponding desired symbol to determine an initial transmission error; and, **characterised by**
repeatedly updating the weight coefficients and redetermining the transmission error until either a predetermined maximum number of updates is performed, or until a last-updated transmission error is less than or equal to a predetermined percentage of the initial transmission error.

9. The adaptive equalization method of claim 8, wherein the receiver (36) is adapted selectively for either stationary use or mobile use.

10. The adaptive equalization method of claim 8, wherein the predetermined percentage is variable, being set at a first percentage when the receiver (36) is adapted for a first use, and a second different percentage when the receiver (36) is adapted for a second different use.

11. The adaptive equalization method of claim 10, wherein the first percentage is lower than the second percentage.

12. The adaptive equalization method of claim 8, wherein the predetermined maximum number of updates is equal to a total number of feed-forward and feedback taps.

13. The adaptive equalization method of claim 8, wherein the transmission error is the squared magnitude of a gradient function Grad[$W_k$(i)] of a weight coefficient vector $W_k$(i) for symbol i, the gradient function being determined in accordance with the expression:

$$\mathbf{Grad[W_k(i)]} = 2/nw \sum\nolimits_{j=i-nw+1}^{i} \; \mathbf{(W_k(i)'Q(j)-D(j))Q(j)}$$

where, nw is a scalar representing a gradient averaging window size, $Q$(j) is a vector of the nw most-recent feed-forward and feedback filter inputs, and $D$(j) is a scalar representing the known training symbol.

14. The adaptive equalization method of claim 13, wherein the weight coefficients are updated in accordance with the expression:

$$W_{k+1}(i)=W_k(i)+a(k)n(k)$$

where k is a weight coefficient update number, $W_k$(i) is a vector of the current weight coefficients for symbol i, $W_{k+1}$(i) is a vector of updated weight coefficients for symbol i, $n$(k) is an error-correcting direction vector, and a(k) is a variable step size.

15. The adaptive equalization method of claim 14, wherein step size a(k) varies in accordance with the expression:

$$a(k) = Grad[W_k(i)]'n(k)/n(k)'(Grad[W_k(i)]-Grad[y(k)])$$

where y(k) is an intermediate vector equal to $W_k$(i)-Grad[$W_k$(i)].

16. A digital communication system (30) including a receiver (36) configured to receive a degraded multi-symbol signal which has been sent over a communication channel (34), said receiver (36) comprising:

    a feed-forward filter (52) which receives the degraded signal, said feed-forward filter (52) including a plurality of time-varied, weighted feed-forward taps which combine to produce an intermediate feed-forward signal;
    a feedback filter (54) which receives a selected output signal, said feedback filter (54) including a plurality of time-varied weighted feedback taps which combine to produce an intermediate feedback signal;
    an adder (80) which combines said intermediate feed-forward signal with said intermediate feedback signal to produce a modified signal with reduced intersymbol interference relative to the degraded signal;
    a detector (56) which compares the modified signal with predetermined signal criteria to produce an estimated output signal; and **characterised by**
    a tap weight update generator which compares the modified signal to a desired output signal to determine an initial transmission error for use in initially updating tap weights for a current symbol, tap weights subsequently being recursively updated for each symbol based on corresponding transmission errors until either a predetermined number of updates are made, or until the corresponding transmission error is less than or equal to a predetermined percentage of the initial transmission error.

17. The communication system of claim 16, wherein the tap weight update generator recursively updates tap weights for symbol i according to the expression:

$$W_{k+1}(i)=W_k(i)+a(k)n(k)$$

where weight update step size a(k) for tap weight update number **k** is equal to:

$$Grad[W_k(i)]'n(k)/n(k)'(Grad[W_k(i)]-Grad[y(k)])$$

and error-correcting direction vector $\mathbf{n}(k)$ is equal to:

$$-\mathrm{Grad}[W_k(i)]+b(k\text{-}1)n(k\text{-}1)$$

with transmission error of tap weight update number k being equal to the squared magnitude of a gradient function $\mathrm{Grad}[\mathbf{W}_k(i)]$ equal to:

$$2/\mathrm{nw} \sum_{j=i-nw+1}^{i} (\mathbf{W}_k(i)'\mathbf{Q}(j)-\mathbf{D}(j))\mathbf{Q}(j)$$

and direction scaling factor $b(k\text{-}1)$ being equal to:

$$\mathrm{Grad}[W_k(i)]'\mathrm{Grad}[W_k(i)]/\mathrm{Grad}[W_{k\text{-}1}(i)]'\mathrm{Grad}[W_{k\text{-}1}(i)]$$

where, nw is a scalar representing a gradient averaging window size, $\mathbf{Q}(j)$ is a vector of the nw most recent feed-forward and feedback filter inputs, $\mathbf{D}(j)$ is a scalar representing the desired symbol, $\mathbf{W}_k(i)$ is a vector of current weight coefficients for symbol i, and $\mathbf{y}(k)$ is an intermediate vector equal to $\mathbf{W}_k(i)-\mathrm{Grad}[\mathbf{W}_k(i)]$.

18. A cellular telephone communication system (30) including a transmitter (32) configured to transmit an original training signal over a communication channel (34), and a receiver (36) configured to receive a degraded training signal which has been degraded by transmission over the communication channel (34), said receiver (36) comprising:

a feed-forward filter (52) means which receives the degraded training signal, said feed-forward filter (52) means including a plurality of time-varied, weighted feed-forward taps which combine to produce an intermediate feed-forward signal;

a feedback filter (54) means which receives the original training signal, which is known by the receiver, said feedback filter (54) means including a plurality of time-varied weighted feedback taps which combine to produce an intermediate feedback signal;

an adding means (80) which combines said intermediate feed-forward signal with said intermediate feedback signal to produce a modified signal with reduced intersymbol interference;

a detector means (56) which compares the modified input with predetermined signal criteria to produce an estimated output signal; and **characterised by**

a tap weight update generator means which compares the modified input signal to the known original training signal to determine an initial transmission error, tap weights being recursively updated based on corresponding transmission errors until either a predetermined number of updates are made, or until the corresponding transmission error is less than or equal to a predetermined percentage of the initial transmission error.

19. A cellular telephone receiver (36) for use in receiving a degraded signal which has been degraded from an original signal by transmission over a communication channel (34), said receiver comprising:

a feed-forward filter (52) which receives the degraded signal, said feed-forward filter including a plurality of time-varied, weighted feed-forward taps which combine to produce an intermediate feed-forward signal;

a feedback filter (54) which receives the original signal, said feedback filter including a plurality of time-varied weighted feedback taps which combine to produce an intermediate feedback signal;

an adder (80) which combines said intermediate feed-forward signal with said intermediate feedback signal to produce a modified signal with reduced intersymbol interference;

a detector (56) which compares the modified signal with predetermined signal criteria to produce an estimated output signal; and **characterised by**

a tap weight update generator which compares the modified input signal to a desired signal to determine an initial transmission error, tap weights being recursively updated based on corresponding transmission errors until either a predetermined number of updates are made, or until the corresponding transmission error is less than or equal to a predetermined percentage of the initial transmission error.

**Patentansprüche**

1.  Adaptives Entzerrungsverfahren zur Verwendung in einem digitalen Kommunikationssystem (30), das einen entscheidungsrückgekoppelten Entzerrer (50) mit einem Mitkopplungs-filter (52) mit mehreren gewichteten Mitkopplungsabgriffen und einem Rückkopplungsfilter (54) mit mehreren gewichteten Rückkopplungsabgriffen aufweist, wobei dieses Verfahren die folgenden Schritte aufweist:

    -   Empfangen eines Mehrsymbolsignals;
    -   Verarbeiten des empfangenen Signals durch Einspeisen desselben über das Mitkopplungsfilter (52) und das Rückkopplungafilter (54) und durch Kombinieren entsprechender gewichteter Ausgangssignale der Mitkopplungsabgriffe und der Rückkopplungsabgriffe, um das Signal zu modifizieren; und
    -   Einstellen geschätzter Gewichtungskoeffizienten für die Vorwärts- und die Rückkopplungsabgriffe;

    **gekennzeichnet durch**

    -   wiederholtes Aktualisieren der Gewichtungskoeffizienten und neues Bestimmen eines Übertragungsfehlers, bis entweder eine vorbestimmte Maximalanzahl von Aktualisierungen ausgeführt ist, oder bis der zuletzt aktualisierte Übertragungsfehler kleiner als ein vorbestimmter Prozentsatz des anfänglichen Übertragungsfehlers oder gleich groß ist.

2.  Adaptives Entzerrungsverfahren nach Anspruch 1, bei dem der Vorbestimmte Prozentsatz 10 % beträgt.

3.  Adaptives Entzerrungsverfahren nach Anspruch 1, bei dem die vorbestimmte Maximalanzahl von Aktualisierungen des Gewichtungskoeffizienten der Gesamtanzahl von Mitkopplungs-und Rückkopplungsabgriffen entspricht.

4.  Adaptives Entzerrungsverfahren nach Anspruch 1, bei dem der Fehlerwert der quadrierten Größe einer Gradientenfunktion Grad[$W_k$(i)] für das Symbol i genügt, wobei diese Gradientenfunktion durch den folgenden Ausdruck bestimmt ist:

$$\text{Grad}[W_k(i)] = dE[s^2(i)]dW_k(i)$$

    wobei $E[e^2(i)]$ der Mittelwert der quadrierten Abweichung zwischen einem aktuellen Ausgangssignal des Entzerrers und einem gewünschten Ausgangssignal des Entzerrers ist und $W_k$(i) ein Vektor aktueller Gewichtungskoeffizienten ist.

5.  Adaptives Entzerrungsverfahren nach Anspruch 1, bei dem der Fehlerwert der quadrierten Größe einer Gradientenfunktion Grad[$W_k$(i)] für das Symbol i genügt, wobei diese Gradientenfunktion durch den folgenden Ausdruck bestimmt ist:

$$\text{Grad}[W_k(i)] = 2/nw \sum_{j=i-nw+1}^{i} (W_k(i)'Q(j)-D(j))Q(j)$$

    wobei nw ein Skalar ist, der einen die Fenstergröße mittelnden Gradienten repräsentiert, $W_k$(i) ein Vektor aktueller Gewichtungskoeffizienten ist, Q(j) ein Vektor der nw jüngsten Eingangssignale in das Mitkopplungs- und das Rückkopplungsfilter ist und D(j) ein Skalar ist, der ein bekanntes aktuelles Trainingssymbol während eines Entzerrertrainings und ein vorbestimmtes, aktuelles Datensymbol während Datenkommunikation repräsentiert.

6.  Adaptives Entzerrungsverfahren nach Anspruch 5, bei dem die Gewichtungskoeffizienten gemäß dem Ausdruck

$$W_{k+1}(i)=W_k(i)+a(k)n(k)$$

    aktualisiert werden, wobei k eine Gewichtungskoeffizient-Aktualisierungszahl ist, $W_k$(i) ein Vektor aktueller Gewichtungskoeffizienten für das Symbol i ist, $W_{k+1}$(i) ein Vektor aktualisierter Gewichtungskoeffizienten für das Symbol i ist, n(k) ein Fehlerkorrekturrichtungsvektor ist und a (k) eine variable Schrittgröße ist.

7.  Adaptives Entzerrungsverfahten nach Anspruch 6, bei dem die Schrittgröße a(k) gemäß dem Ausdruck

$$a(k) = Grad[W_k(i)]'n(k)/n(k)'(Grad[W_k(i)]-Grad[y(k)])$$

variiert, wobei y(k) ein Zwischenvektor ist, der $W_k(i)$-Grad$[W_k(i)]$ entsprioht.

8.  Adaptives Entzerrungsverfahren zur Verwendung in einem digitalen Kleinzonen-Kommunikationssystem (30) unter Verwendung eines Senders (32) zum Senden eines Mehrsymbolsignals und eines Empfängers (36) zum Empfangen eines beeinträchtigten Mehrsymbolsignals, wobei der Empfänger (36) über einen entscheidungsrückgekoppelten Entzerrer (50) mit einem Mitkopplungstilter (52) mit mehreren gewichteten Mitkopplungsabgriffen und ein Rückkopplungsfilter (54) mit mehreren gewichteten Rückkopplungsabgriffen verfügt, wobei dieses Verfahren die folgenden Schritte aufweist:

    -   Einstellen abgeschätzter Gewichtungskoeffizienten für die Mitkopplungs- und die Rückkopplungsabgriffe;
    -   Senden eines Symbols über einen Kommunikationskanal (34) zum Empfänger (36), wobei das Symbol dem Empfänger (36) bekannt ist;
    -   Empfangen eines beeinträchtigten Symbols, das aus dem über den Kommmikationskanal (34) gelieferten Symbol hergeleitet ist;
    -   Verarbeiten des beeinträchtigten Symbols zum Einspeisen des beeinträchtigten Symbols über das Mitkopplungs- und das Rückkopplungsfilter (52, 54) und durch Kombinieren entsprechender gewichteter Ausgangssignale der Mitkopplungs- und der Rückkopplungsabgriffe, um ein modifiziertes Symbol zu erzeugen;
    -   Analysieren des modifizierten Symbols zum Abschätzen des gesendeten Symbols;
    -   Vergleichen des modifizierten Symbols mit einem entsprechenden gewünschten Symbol, um einen anfänglichen Übertragungsfehler zu ermitteln;

    **gekennzeichnet durch**

    -   wiederholtes Aktualisieren der Gewichtungskoeffizienten und neues Bestimmen eines Übertragungsfehlers, bis entweder eine vorbestimmte Maximalanzahl von Aktualisierungen ausgeführt ist, oder bis der zuletzt aktualisierte Übertragungsfehler kleiner als ein vorbestimmter Prozentsatz des anfänglichen Übertragungsfehlers oder gleich groß ist.

9.  Adaptives Entzerrungsverfahren nach Anspruch 8, bei dem der Empfänger (36) selektiv für entweder stationäre oder mobile Verwendung ausgebildet ist.

10. Adaptives Entzerrungsverfahren nach Anspruch 8, bei dem der vorbestimmte Prozentsatz varigbel ist, wobei er auf einen ersten Prozentsatz gesetzt wird, wenn der Empfänger (36) für eine erste Verwendung ausgebildet ist und auf einen zweiten, anderen Prozentsatz gesetzt wird, wenn der Empfänger (36) für eine zweite, andere Verwendung ausgebildet ist.

11. Adaptives Entzerrungsverfahren nach Anspruch 10, bei dem der erste Prozentsatz niedriger als der zweite Prozentsatz ist.

12. Adaptives Entzerrungsverfahren nach Anspruch 8, bei dem die vorbestimmte Maximalanzahl von Aktualisierungen der Gesamtanzahl der Mitkopplungs- und der Rückkopplungsabgriffe entspricht.

13. Adaptives Entzerrungsverfahren nach Anspruch 8, bei dem der Übertragungsfehler der quadrierten Größe einer Gradientenfunktion Grad[Wk(i)] eines Gewichtungskoeffizientenvektors $W_k(i)$ für ein Symbol i genügt, wobei diese Gradientenfunktion durch den folgenden Ausdruck bestimmt ist:

$$Grad[W_k(i)] = 2/nw \sum_{j=i-nw+1}^{i} (W_k(i)'Q(j)-D(j))Q(j)$$

wobei nw ein Skalar ist, der einen die Fenstergröße mittelnden Gradienten repräsentiert, Q(j) ein Vektor der nw jüngsten Eingangssignale in das Mitkopplungs- und das Rückkopplungsfilter ist und D(j) ein Skalar ist, der das bekannte Trainingssymbol repräsentiert.

**14.** Adaptives Entzerrungsverfahren nach Anspruch 13, bei dem die Gewichtungskoeffizienten gemäß dem Ausdruck

$$W_{k+1}(i)=W_k(i)+a(k)n(k)$$

aktualisiert werden, wobei k eine Gewichtungskoeffizient-Aktualisierungszahl ist, $W_k(i)$ ein Vektor aktueller Gewichtungskoeffizienten für das Symbol i ist, Wk+1(i) ein Vektor aktueller Gewichtungskoeffizienten für das Symbol i ist, n(k) ein Fehlerkorrekturrichtungsvektor ist und a(k) eine variable Schrittgröße ist.

**15.** Adaptives Entzerrungsverfahren nach Anspruch 14, bei dem die Schrittgröße a(k) gemäß dem Ausdruck

$$a(k) = Grad[W_k(i)]'n(k)/n(k)'(Grad[W_k(i)]-Grad[y(k)])$$

variiert, wobei y(k) ein mittlerer Vektor ist, der $W_k(i)$-Grad$[W_k(i)]$ entspricht.

**16.** Digitales Kommunikationssystem (30) mit einem Empfänger (36), der so konfiguriert ist, dass er ein beeinträchtigtes Mehrsymbolsignal empfängt, das über einen Kommunikationskanal (34) geliefert wurde, wobei dieser Empfänger (36) Folgendes aufweist:

- ein Mitkopplungsfilter (52), das das beeinträchtigte Signal empfängt und über mehrere einer Zeitvariation entsprechende, gewichtete Mitkopplungsabgriffe verfügt, die eine solche Kombination bilden, dass ein Zwischen-Mitkopplungssignal erzeugt wird;
- ein Rückkopplungsfilter (54), das ein ausgewähltes Ausgangssignal empfängt und über mehrere einer Zeitvariation entsprechende, gewichtete Rückkopplungsabgriffe verfügt, die eine solche Kombination bilden, dass ein Zwischen-Rückkopplungssignal erzeugt wird;
- einen Addierer (80), der das Zwischen-Mitkopplungssignal mit dem Zwischen-Rückkopplungssignal kombiniert, um ein modifiziertes Signal mit verringerter Zwischensymbolinterferenz in Bezug auf das beeinträchtigte Signal zu erzeugen;
- einen Detektor (56), der das modifizierte Signal mit vorbestimmten Signalkriterien vergleicht, um ein abgeschätztes Ausgangssignal zu erzeugen;

**gekennzeichnet durch**

- einen Abgriffsgewiehtungs-Aktualisierungsgenerator, der das modifizierte Signal mit einem gewünschten Ausgangssignal vergleicht, um einen anfänglichen Übertragungsfehler zur Verwendung beim anfänglichen Aktualisieren von Abgriffsgewichtungen für ein aktuelles Symbol zu bestimmen, wobei Abgriffsgewichtungen anschließend rekursiv für jedes Symbol auf Grundlage entsprechender Übertragungsfehler aktualisiert werden, bis entweder eine vorbestimmte Anzahl von Aktualisierungen erfolgt ist oder bis der entsprechende Übertragungsfehler kleiner als ein vorbestimmter Prozentsatz des anfänglichen Übertragungsfehlers oder gleich groß ist.

**17.** Kommunikationssystem nach Anspruch 16, bei dem der Abgriffsgewichtungs-Aktualisierungsgenerator rekursiv Abgriffsgewichtungen für das Symbol i entsprechend dem folgenden Ausdruck aktualisiert:

$$W_{k+1}(i)-W_k(i)+a(k)n(k)$$

wobei die Gewichtungsaktualisierungsschrittgröße a(k) für die Abgriffsgewichtungs-Aktualisierungsnummer k dem folgenden Wert entspricht:

$$a(k) = Grad[W_k(i)]'n(k)/n(k)'(Grad[W_k(i)]-Grad[y(k)])$$

und der Fehlerkorrekturrichtungsvektor n(k) der Folgende ist:

$$-\text{Grad}[W_k(i)]+b(k-1)n(k-1)$$

wobei der Übertragungsfehler für die Abgriffsgewichtungs-Aktualisierungsnummer k, der der quadrierten Größe einer Gradientenfunktion Grad[$W_k$(i)] entspricht, den folgenden Wert hat:

$$2/nw \sum_{j=i-nw+1}^{i} (W_k(i)'Q(j)-D(j))Q(j)$$

und der Richtungsskalierungsfaktor b(k-1) den folgenden Wert hat:

$$\text{Grad}[W_k(i)]'\text{Grad}[W_k(i)]/\text{Grad}[W_{k-1}(i)]'\text{Grad}[W_{k-1}(i)]$$

wobei nw ein Skalar ist, der einen die Fenstergröße Mittelnden Gradienten repräsentiert, Q(j) ein Vektor der nw jüngsten Eingangssignale in das Mitkopplungs- und das Rückkopplungsfilter ist, D(j) ein Skalar ist, der das gewünschte symbol repräsentiert, $W_k$(i) ein Vektor aktueller Gewichtungekoeffizienten für das Symbol i ist und y(k) ein Zwischenvektor ist, der $W_k$(i)-Grad[$W_k$(i)] entspricht.

18. Kleinzonen-Telefonkommunikationssystem (30) mit einem Sender (32), der so konfiguriert ist, dass er ein ursprüngliches Trainingssignal über einen Kommunikationskanal (34) überträgt, und einem Empfänger (36), der so konfiguriert ist, dass er ein beeirtträchtigtes Trainingssignal empfängt, das durch die Übertragung über den Kommunikationskanal (34) beeinträchtigt wurde, wobei dieser Empfänger (36) Folgendes aufweist:

  - ein Mitkopplungsfilter (52), das das beeinträchtigte Trainingssignal empfängt und über mehrere einer Zeitvariation entsprechende, gewichtete Mitkopplungsabgriffe verfügt, die eine solche Kombination bilden, dass ein Zwischen-Mitkopplungssignal erzeugt wird;
  - ein Rückkopplungsfilter (54), das das dem Empfänger bekannte ursprüngliche Trainingssignal empfängt und über mehrere einer Zeitvariation entsprechende, gewichtete Rückkopplungsabgriffe verfügt, die eine solche Kombination bilden, dass ein Zwischan-Rückkopplungssignal erzeugt wird;
  - eine Addiereinrichtung (80), die das Zwischen-Mitkopplungssignal mit dem Zwischen-Rückkopplungssignal kombiniert, um ein modifiziertes Signal mit verringerter Zwischensymbolinterferanz in Bezug auf das beeinträchtigte Signal zu erzeugen;
  - eine Detektoreinrichtung (56), die das modifizierte signal mit vorbestimmten Signalkriterien vergleicht, um ein abgeschätztes Ausgangssignal zu erzeugen;

  **gekennzeichnet durch**

  - eine Abgriffsgewichtungs-Aktualisierungsgeneratoreinrichtung, die das modifizierte Eingangssignal mit dem bekannten ursprünglichen Trainingssignal vergleicht, um einen anfänglichen Übertragungsfehler zu bestimmen, wobei Abgriffsgewichtungen auf Grundlage entsprechender Übertragungsfehler rekursiv aktualisiert werden, bis entweder eine vorbestimmte Anzahl von Aktualisierungen erfolgt ist, oder bis der entsprechende Übertragungsfehler kleiner als ein vorbestimmter Prozentsatz des anfänglichen Übertragungsfehlers oder gleich groß ist.

19. Kleinzonen-Telefonempfänger (36) zur Verwendung beim Empfangen eines beeinträchtigten Signals, das durch Übertragung über einen Kolmunikationskanal (34) gegenüber einem ursprünglichen Signal beeinträchtigt wurde, wobei dieser Empfänger Folgendes aufweist:

  - ein Mitkopplungsfilter (52), das das beeinträchtigte Signal empfängt und über mehrere einer Zeitvariation entsprechende, gewichtete Mitkopplungsabgriffe verfügt, die eine solche Kombination bilden, dass ein Zwischen-Mitkopplungssignal erzeugt wird;

- ein Rückkopplungsfilter (54), das ein ausgewähltes Ausgangssignal empfängt und über mehrere einer Zeitvariation entsprechende, gewichtete Rückkopplungsabgriffe verfügt, die eine solche Kombination bilden, dass ein Zwischen-Rückkopplungssignal erzeugt wird;
- einen Addierer (80), der das Zwischen-Mitkopplungssignal mit dem Zwischen-Rückkopplungssignal kombiniert, um ein modifiziertes Signal mit verringerter Zwischensymbolinterferenz in Bezug auf das beeinträchtigte Signal zu erzeugen;
- einen Detektor (56), der das modifizierte Signal mit vorbestimmten Signalkriterien vergleicht, um ein abgeschätztes Ausgangssignal zu erzeugen;

**gekennzeichnet durch**

- einen Abgriffsgewichtungs-Aktualisierungsgenerator, der das modifizierte Eingangssignal mit einem gewünschten Signal vergleicht, um einen anfänglichen Übertragungsfehler zu ermitteln, wobei Abgriffsgewichtungen rekursiv auf Grundlage entsprechender Übertragungsfehler aktualisiert werden, bis entweder eine vorbestimmte Anzahl von Aktualisierungen erfolgt ist oder bis der entsprechende Übertragungsfehler kleiner als ein vorbestimmter Prozentsatz des anfänglichen Übertragungsfehlers oder gleich groß ist.

**Revendications**

1. Méthode d'égalisation adaptative destinée à être mise en oeuvre dans un système de communication numérique (30) qui utilise un égaliseur de décision rétroactif (50) équipé d'un filtre anticipatif (52) comportant plusieurs prélèvements anticipatifs pondérés, et d'un filtre rétroactif (54) comportant plusieurs prélèvements rétroactifs pondérés, ladite méthode comprenant les étapes de:

   réception d'un signal multisymbole;
   traitement du signal reçu par le passage de celui-ci à travers le filtre anticipatif (52) et le filtre rétroactif (54), et la combinaison de sorties pondérées correspondantes des prélèvements anticipatifs et des prélèvements rétroactifs pour modifier le signal; et
   définition de coefficients de pondération estimés pour les prélèvements anticipatifs et rétroactifs;

   **caractérisée par**
   l'actualisation de manière répétée des coefficients de pondération et la redétermination d'une erreur de transmission jusqu'à ce qu'un nombre maximum prédéterminé d'actualisations soit réalisé ou jusqu'à ce qu'une erreur de transmission actualisée en dernier soit inférieure ou égale à un pourcentage prédéterminé de l'erreur de transmission initiale.

2. Méthode d'égalisation adaptative selon la revendication 1, dans laquelle le pourcentage prédéterminé est de dix pour cent.

3. Méthode d'égalisation adaptative selon la revendication 1, dans laquelle le nombre maximum prédéterminé d'actualisations de coefficients de pondération est égal à un nombre total de prélèvements anticipatifs et rétroactifs.

4. Méthode d'égalisation adaptative selon la revendication 1, dans laquelle la valeur d'erreur est la grandeur quadratique d'une fonction à gradient $Grad[W_k(i)]$ pour un symbole i, la fonction à gradient étant déterminée conformément à l'expression:

$$Grad[W_k(i)]=dE[e^2(i)dW_k(i)$$

   dans laquelle $E[e^2(i)]$ est la moyenne de l'erreur quadratique entre une sortie réelle de l'égaliseur et une sortie souhaitée de l'égaliseur, et $W_k(i)$ est un vecteur de coefficients de pondération en cours.

5. Méthode d'égalisation adaptative selon la revendication 1, dans laquelle la valeur d'erreur est la grandeur quadratique d'une fonction à gradient $Grad[W_k(i)]$ pour un symbole i, la fonction à gradient étant déterminée conformément à l'expression:

$$\text{Grad}[W_k(i)] = 2/nw \sum_{j=i-nw+1}^{i} (W_k(i)'Q(j)-D(j))Q(j)$$

dans laquelle nw est un scalaire représentant une taille de fenêtre de moyennage de gradient, $W_k(i)$ est un vecteur de coefficients de pondération en cours, $Q(j)$ est un vecteur des nw entrées les plus récentes des filtres anticipatif et rétroactif et $D(j)$ est un scalaire représentant un symbole d'apprentissage en cours connu pendant un apprentissage de l'égaliseur et un symbole de données en cours déterminé pendant une communication de données.

6.  Méthode d'égalisation adaptative selon la revendication 5, dans laquelle les coefficients de pondération sont actualisés conformément à l'expression:

$$W_{k+1}(i) = W_k(i) + a(k)n(k)$$

dans laquelle k est un nombre d'actualisations des coefficients de pondération, $W_k(i)$ est un vecteur de coefficients de pondération en cours pour un symbole i, $W_{k+1}(i)$ est un vecteur de coefficients de pondération actualisés pour le symbole i, $n(k)$ est un vecteur de direction de correction d'erreur et $a(k)$ est un pas de progression variable.

7.  Méthode d'égalisation adaptative selon la revendication 6, dans laquelle le pas de progression $a(k)$ varie conformément à l'expression:

$$a(k) = \text{Grad}[W_k(i)]'n(k)/n(k)'(\text{Grad}[W_k(i)]-\text{Grad}[y(k)])$$

dans laquelle $y(k)$ est un vecteur intermédiaire égal à $W_k(i)-\text{Grad}[W_k(i)]$.

8.  Méthode d'égalisation adaptative destinée à être mise en oeuvre dans un système de communication cellulaire numérique (30) qui utilise un émetteur (32) pour envoyer un signal multisymbole et un récepteur (36) pour recevoir un signal multisymbole dégradé, le récepteur (36) comprenant un égaliseur de décision rétroactif (50) équipé d'un filtre anticipatif (52) comportant plusieurs prélèvements anticipatifs pondérés, et d'un filtre rétroactif (54) comportant plusieurs prélèvements rétroactifs pondérés, ladite méthode comprenant les étapes de:

    définition de coefficients de pondération estimés pour les prélèvements anticipatifs et rétroactifs;
    envoi d'un symbole au récepteur (36) sur un canal de communication (34), le symbole étant connu du récepteur (36);
    réception d'un symbole dégradé dérivé du symbole qui a été envoyé sur le canal de communication (34);
    traitement du symbole dégradé par passage de celui-ci à travers les filtres anticipatif et rétroactif (52, 54), et par combinaison de sorties pondérées correspondantes des prélèvements anticipatifs et rétroactifs pour produire un symbole modifié;
    analyse du symbole modifié pour estimer le symbole envoyé;
    comparaison du symbole modifié avec un symbole souhaité correspondant pour déterminer une erreur de transmission initiale; et **caractérisée par**
    l'actualisation de manière répétée des coefficients de pondération et la redétermination de l'erreur de transmission jusqu'à ce qu'un nombre maximum prédéterminé d'actualisations soit réalisé ou jusqu'à ce qu'une erreur de transmission actualisée en dernier soit inférieure ou égale à un pourcentage prédéterminé de l'erreur de transmission initiale.

9.  Méthode d'égalisation adaptative selon la revendication 8, dans laquelle le récepteur (36) est adapté sélectivement pour un usage fixe ou un usage mobile.

10. Méthode d'égalisation adaptative selon la revendication 8, dans laquelle le pourcentage prédéterminé est variable, en étant fixé à un premier pourcentage lorsque le récepteur (36) est adapté pour une premier usage, et à un second pourcentage différent lorsque le récepteur (36) est adapté pour un second usage différent.

11. Méthode d'égalisation adaptative selon la revendication 10, dans laquelle le premier pourcentage est inférieur au second pourcentage.

**12.** Méthode d'égalisation adaptative selon la revendication 8, dans laquelle le nombre maximum prédéterminé d'actualisations est égal à un nombre total de prélèvements anticipatifs et rétroactifs.

**13.** Méthode d'égalisation adaptative selon la revendication 8, dans laquelle l'erreur de transmission est la grandeur quadratique d'une fonction à gradient Grad[$W_k(i)$] d'un vecteur de coefficient de pondération $W_k(i)$ pour un symbole i, la fonction à gradient étant déterminée conformément à l'expression:

$$\text{Grad}[W_k(i)] = 2/nw \sum_{j=i-nw+1}^{i} (W_k(i)'Q(j)-D(j))Q(j)$$

dans laquelle nw est un scalaire représentant une taille de fenêtre de moyennage de gradient, Q(j) est un vecteur des nw entrées les plus récentes des filtres anticipatif et rétroactif et D(j) est un scalaire représentant le symbole d'apprentissage connu.

**14.** Méthode d'égalisation adaptative selon la revendication 13, dans laquelle les coefficients de pondération sont actualisés conformément à l'expression:

$$W_{k+1}(i)=W_k(i)+a(k)n(k)$$

dans laquelle k est un nombre d'actualisations des coefficients de pondération, $W_k(i)$ est un vecteur de coefficients de pondération en cours pour un symbole i, $W_{k+1}(i)$ est un vecteur de coefficients de pondération actualisés pour le symbole i, n(k) est un vecteur de direction de correction d'erreur et a(k) est un pas de progression variable.

**15.** Méthode d'égalisation adaptative selon la revendication 14, dans laquelle le pas de progression a(k) varie conformément à l'expression:

$$a(k) = \text{Grad}[W_k(i)]'n(k)/n(k)'(\text{Grad}[W_k(i)]-\text{Grad}[y(k)])$$

dans laquelle y(k) est un vecteur intermédiaire égal à $W_k(i)$-Grad[$W_k(i)$].

**16.** Système de communication numérique (30) comprenant un récepteur (36) configuré pour recevoir un signal multisymbole dégradé qui a été envoyé sur un canal de communication (34), ledit récepteur (36) comprenant:

un filtre anticipatif (52) qui reçoit le signal dégradé, ledit filtre anticipatif (52) comportant plusieurs prélèvements anticipatifs pondérés à variation temporelle qui se combinent pour produire un signal anticipatif intermédiaire;
un filtre rétroactif (54) qui reçoit un signal de sortie sélectionné, ledit filtre rétroactif (54) comportant plusieurs prélèvements rétroactifs pondérés à variation temporelle qui se combinent pour produire un signal rétroactif intermédiaire;
un additionneur (80) qui combine ledit signal anticipatif intermédiaire avec ledit signal rétroactif intermédiaire pour produire un signal modifié présentant une interférence entre symboles réduite par rapport au signal dégradé;
un détecteur (56) qui compare le signal modifié avec des critères de signal prédéterminés pour produire un signal de sortie estimé; et **caractérisé par**
un générateur d'actualisations de pondérations de prélèvements qui compare le signal modifié à un signal de sortie souhaité pour déterminer une erreur de transmission initiale destinée à être utilisée pour l'actualisation initiale de pondérations de prélèvements pour un symbole en cours, les pondérations de prélèvements étant ensuite actualisées de manière récursive pour chaque symbole en fonction d'erreurs de transmission correspondantes jusqu'à ce qu'un nombre prédéterminé d'actualisations soit réalisé ou jusqu'à ce que l'erreur de transmission correspondante soit inférieure ou égale à un pourcentage prédéterminé de l'erreur de transmission initiale.

**17.** Système de communication selon la revendication 16, dans lequel le générateur d'actualisations de pondérations de prélèvements actualise de manière récursive des pondérations de prélèvements pour un symbole i conformément à l'expression:

$$W_{k+1}(i)=W_k(i)+a(k)n(k)$$

dans laquelle le pas de progression d'actualisations de pondérations a(k) pour un nombre d'actualisations de pondérations de prélèvements k est égal à:

$$\text{Grad}[W_k(i)]'n(k)/n(k)'(\text{Grad}[W_k(i)]-\text{Grad}[y(k)])$$

et un vecteur de direction de correction d'erreur n(k) est égal à:

$$-\text{Grad}[W_k(i)]+b(k-1)n(k-1)$$

une erreur de transmission du nombre d'actualisations de pondérations de prélèvements k étant égale à la grandeur quadratique d'une fonction à gradient Grad[$W_k$(i)] égale à:

$$2/nw \sum\nolimits_{j=i-nw+1}^{i} (W_k(i)'Q(j)-D(j))Q(j)$$

et un facteur d'échelle de direction b(k-1) étant égal à:

$$\text{Grad}[W_k(i)]'\text{Grad}[W_k(i)]/\text{Grad}[W_{k-1}(i)]'\text{Grad}[W_{k-1}(i)]$$

où nw est un scalaire représentant une taille de fenêtre de moyennage de gradient, Q(j) est un vecteur des nw entrées les plus récentes des filtres anticipatif et rétroactif, D(j) est un scalaire représentant le symbole souhaité, $W_k$(i) est un vecteur de coefficients de pondération en cours pour un symbole i, et y(k) est un vecteur intermédiaire égal à $W_k$(i)-Grad[$W_k$(i)].

18. Système de communication téléphonique cellulaire (30) comprenant un émetteur (32) configuré pour transmettre un signal d'apprentissage d'origine sur un canal de communication (34), et un récepteur (36) configuré pour recevoir un signal d'apprentissage dégradé qui a été dégradé par sa transmission sur le canal de communication (34), ledit récepteur (36) comprenant:

   un moyen formant filtre anticipatif (52) qui reçoit le signal d'apprentissage dégradé, ledit moyen formant filtre anticipatif (52) comportant plusieurs prélèvements anticipatifs pondérés à variation temporelle qui se combinent pour produire un signal anticipatif intermédiaire;
   un moyen formant filtre rétroactif (54) qui reçoit le signal d'apprentissage d'origine connu du récepteur, ledit moyen formant filtre rétroactif (54) comportant plusieurs prélèvements rétroactifs pondérés à variation temporelle qui se combinent pour produire un signal rétroactif intermédiaire;
   un moyen additionneur (80) qui combine ledit signal anticipatif intermédiaire avec ledit signal rétroactif intermédiaire pour produire un signal modifié présentant une interférence entre symboles réduite;
   un moyen détecteur (56) qui compare le signal d'entrée modifié avec des critères de signal prédéterminés pour produire un signal de sortie estimé; et **caractérisé par**
   un moyen générateur d'actualisations de pondérations de prélèvements qui compare le signal d'entrée modifié au signal d'apprentissage d'origine connu pour déterminer une erreur de transmission initiale, des pondérations de prélèvements étant actualisées de manière récursive en fonction d'erreurs de transmission correspondantes jusqu'à ce qu'un nombre prédéterminé d'actualisations soit réalisé ou jusqu'à ce que l'erreur de transmission correspondante soit inférieure ou égale à un pourcentage prédéterminé de l'erreur de transmission initiale.

19. Récepteur de téléphone cellulaire (36) destiné à être utilisé pour recevoir un signal dégradé qui a été dégradé par rapport à un signal d'origine par sa transmission sur un canal de communication (34), ledit récepteur comprenant:

un filtre anticipatif (52) qui reçoit le signal dégradé, ledit filtre anticipatif comportant plusieurs prélèvements anticipatifs pondérés à variation temporelle qui se combinent pour produire un signal anticipatif intermédiaire; un filtre rétroactif (54) qui reçoit le signal d'origine, ledit filtre rétroactif comportant plusieurs prélèvements rétroactifs pondérés à variation temporelle qui se combinent pour produire un signal rétroactif intermédiaire; un additionneur (80) qui combine ledit signal anticipatif intermédiaire avec ledit signal rétroactif intermédiaire pour produire un signal modifié présentant une interférence entre symboles réduite; un détecteur (56) qui compare le signal modifié avec des critères de signal prédéterminés pour produire un signal de sortie estimé; et **caractérisé par**

un générateur d'actualisations de pondérations de prélèvements qui compare le signal d'entrée modifié à un signal souhaité pour déterminer une erreur de transmission initiale, des pondérations de prélèvements étant actualisées de manière récursive en fonction d'erreurs de transmission correspondantes jusqu'à ce qu'un nombre prédéterminé d'actualisations soit réalisé ou jusqu'à ce que l'erreur de transmission correspondante soit inférieure ou égale à un pourcentage prédéterminé de l'erreur de transmission initiale.

EP 0 755 141 B1

## 1 FRAME

| 1 | 2 | 3 | 4 | 5 | 6 |
|---|---|---|---|---|---|

~10

| TRAINING | DATA | MISC |
|----------|------|------|

20 →

22    24    26

**Fig.1**

S(t)

40a — MODULATOR

~32

42a — PULSE-SHAPING FILTER

44a — BASEBAND TO RF CONVERTER

38b — CHANNEL

38a

30 →

34

ADDITIVE NOISE

46

+ 48

36 —

U(t)

DEMODULATOR — 40b

X(t)

MATCHED FILTER — 42b

RF TO BASEBAND CONVERTER — 44b

**Fig.2**

Fig.3

EP 0 755 141 B1

$\overset{\displaystyle 100}{}$

START — 110

SET k=0 — 112

SET WEIGHT COEFFICIENTS TO
INITIAL WEIGHT COEFFICIENT ESTIMATES
$W_0(i)$
— 114

COMPUTE INITIAL GRADIENT
GRAD $[W_0(i)]$
— 116

UPDATE WEIGHT COEFFICIENTS
$W_{k+1}(i)$
— 118

COMPUTE NEW GRADIENT
GRAD $[W_{k+1}(i)]$
— 120

122

$$\frac{\text{GRAD}[W_{k+1}(i)]^2}{\text{GRAD}[W_0(i)]^2} \leq \text{THRESHOLD} \, ?$$

YES

NO

SET k=k+1 — 126

128

$k=k_{MAX}$ ?

NO

YES

Fig.4

STOP — 124

Fig.5